# EUROPEAN PATENT SPECIFICATION

(11) **EP 3 698 689 B1**
(45) Date of publication and mention of the grant of the patent: **20.12.2023**
(21) Application number: 20158393.7
(22) Date of filing: 20.02.2020
(51) Int. Cl.: A47J 42/18

(54) **GRINDER-DOSER FOR BEANS, FOR EXAMPLE COFFEE BEANS, WITH A DEVICE FOR AMPLIFYING THE ADJUSTMENT RANGE OF THE GRINDING GRANULOMETRY**
MÜHLE, INSBESONDERE KAFFEEMÜHLE, MIT EINSTELLBAREM KORNGRÖSSENBEREICH
MOULIN À GRAINES, EN PARTICULIER À CAFÉ, COMPRENANT DES MOYENS POUR RÉGLER L'AMPLITUDE DE L'AJUSTEMENT DE LA GRANULOMÉTRIE

(30) Priority: 25.02.2019 IT 201900002687
(43) Date of publication of application: 26.08.2020
(73) Proprietor: Mazzer Luigi S.p.A., 30037 Scorzè (VE) (IT)
(72) Inventor: MICHIELAN, Mauro, 30037 Scorzè, VENEZIA (IT); MOTTA, Michele, 30037 Scorzè, VENEZIA (IT)
(74) Representative: Mitola, Marco

(56) References cited:
- WO-A1-2016/120315
- WO-A2-2004/093615
- CN-A- 107 981 728

## Description

### FIELD OF APPLICATION

The present invention relates to a grinder-doser for beans, for example coffee beans, with a device for amplifying the adjustment range of the grinding granulometry.

### PRIOR ART

In particular, as is known, there exist grinder-dosers for espresso preparations. Grinder-dosers for preparations other than espresso are also known such as, for example, grinder-dosers for Turkish coffee or American coffee.

These coffee-based preparations require different grinding granulometries so as to optimize the specific brewing technique used to extract coffee for preparing the corresponding beverage. In particular, the granulometry has an average particle size which progressively increases ranging from the Turkish-style grinding to espresso or American coffee (also referred to as filtered coffee).

There is also the need to offer the user high accuracy in the research of the granulometry of ground coffee around the degree of granulometry typical for the specific coffee-based preparation.

In a coffee grinder that uses toothed grinders as a crushing tool, the different profiles of granulometric distribution of the coffee powder for the different types of preparations are obtained by acting on the relative distance between the grinders crushing the beans to a powder.

The smaller the relative displacement between the grinders, the greater the degree of accuracy with which a determined and optimal granulometric profile of the coffee powder is defined, in order to enhance the organoleptic properties of the beverage extracted with the specific selected infusion/extraction method.

The best system known on the market is therefore a continuous micrometric adjustment system, wherein all the adjustment positions within a specific range are possible and selectable.

An adjustment system which allows this continuous adjustment is, for example, adjustment by means of a nut-screw coupling by which the grinders (or in general the tools used for crushing the beans) move away from, or approach, each other.

In practical embodiments, at least one of the grinders is driven and rotated by an electric motor; the other grinder is usually fixed. The grinders are housed inside a grinding chamber.

The grinders in turn are supported and kept appropriately oriented by relative grinder-holders in order to provide an annular outlet section between the grinders that is constant over the entire perimeter thereof, to have a homogeneous distribution of the powder at each outlet point from the grinders. It is therefore understood that the grinders are coaxial with each other.

The driven grinder is coupled to the transmission axis of the motor by means of the relative grinder-holder, and it is put in rotation by the electric motor. The adjustment of the distance between the grinders is obtained by moving at least one of the grinders, which in turn is coupled to its grinder-holder, placing it in axial movement (i.e. by bringing it closer or further away from the other grinder along an axial direction parallel to the rotation axis of the grinder) and this is commonly done, as mentioned, by a nut-screw coupling.

Systems are known in the art which to search for the relative position between the grinders and thus to search for the required granulometry, move either the driven grinder or the grinder not driven by the electric motor.

Screw/nut systems are very popular on the market but have limitations.

In fact, a direct adjustment on the screw that contemplates a 360° rotation on the nut thread that generates the relative movement between the grinders generates an approach or removal between the grinders by a distance equal to the threading step.

If we consider that, for example, the complete adjustment range of the 'espresso' type of grinding is in the order of a few hundredths of a millimeter (meant as a variation of the axial distance between the grinders), in a screw/nut screw system that uses a 1 mm pitch, the espresso adjustment takes place in an interval of a few degrees of rotation, therefore with a reduced sensitivity by the operator (the movement of the grinders in the adjustment range for the specific mixture is included on an angle of very small rotation).

To make the relative positioning between the grinders accurate or more ergonomic for the operator, acting directly on the thread of the screw/nut screw, the thread should have a very small pitch (in this way, with a wider angle of rotation, less relative movement would be obtained between the grinders and better operating accuracy) but, on the other hand, the thread would be less robust and less resistant.

Alternatively, there are systems that act with an organ that carries out a transmission with a suitable transmission ratio towards the screw of the screw/nut screw system so as to have, through said transmission, an acceptable positioning precision around the granulometry set point sought (e.g. toothed wheel/worm systems). On the other hand, these systems require a larger footprint, a greater number of pieces and a construction complexity that implies higher costs.

Furthermore, any further mechanical transmission of the transmission system, in the search for the adjustment point, would amplify the possible clearances due to the presence of indispensable clearances in the coupling of the additional components, which would be added to those already provided in the initial screw/nut screw system. Such a system is disclosed by CN 107981728 A.

### DISCLOSURE OF THE INVENTION

The need of solving the drawbacks and limitations mentioned with reference to the prior art is therefore felt.

Such a need is met by a coffee grinder-doser according to claim 1.

### DESCRIPTION OF THE DRAWINGS

Further features and advantages of the present invention will appear more clearly from the following description of preferred non-limiting embodiments thereof, in which:
figure 1 shows a sectional view of a grinder-doser according to an embodiment of the present invention;
figures 2a-2b show simplified sectional views (with some details omitted) of a grinder-doser according to possible embodiments of the present invention;

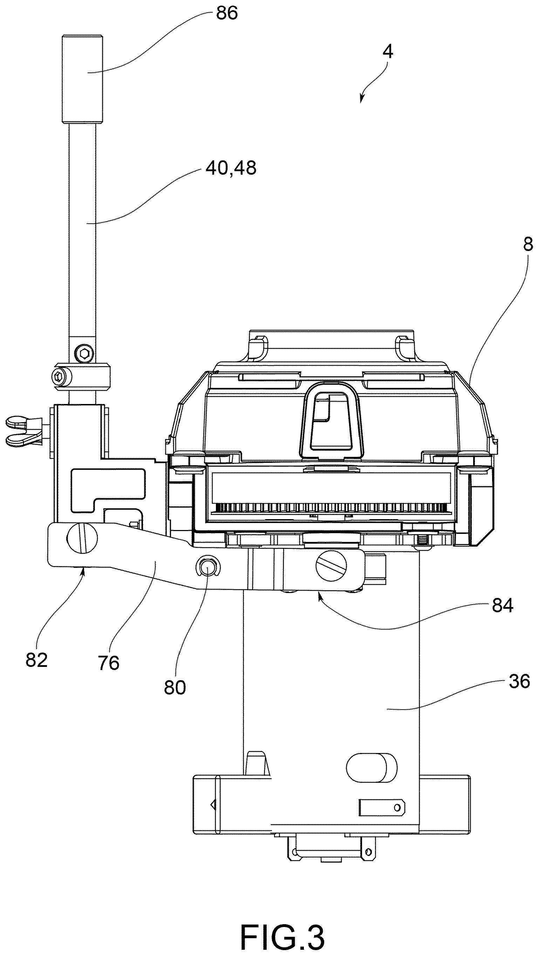

figure 3 shows a lateral view of a grinder-doser according to a further embodiment of the present invention;

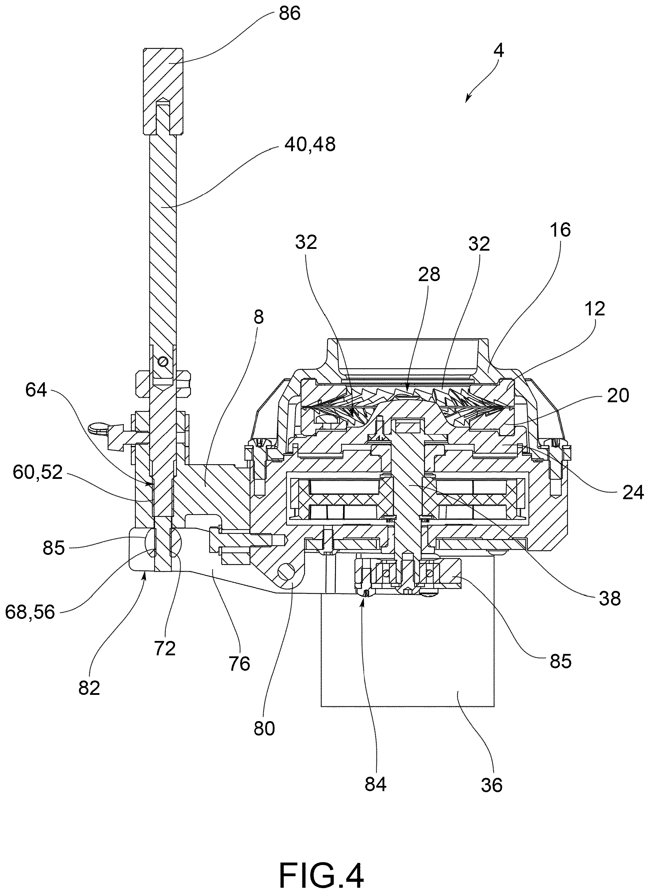

figure 4 shows a sectional view of the grinder-doser of figure 3.
Elements or parts of elements in common to the embodiments described below are referred to with the same reference numerals.

### DETAILED DESCRIPTION

With reference to the above figures, reference numeral 4 globally denotes a coffee grinder-doser according to the present invention.

It should be noted that the grinder-doser of the present invention may not only be applied to grinding of coffee beans, but also to grinding for any beverage or infusion that may be obtained from beans, preferably roasted and subsequently ground, in order to obtain a powder suitable for infusion. Therefore, reference to a "coffee" grinder-doser is made by way of a non-limiting, non-exhaustive, and merely exemplary option of a possible use of the grinder-doser in accordance with the present invention.

The grinder-doser 4 comprising a body 8 which encloses a first grinder 12 supported by a relative first grinder-holder 16, and a second grinder 20 supported by a relative second grinder-holder 24. The body 8 may comprise a main hollow element 10 which houses said grinders 12, 20 and which is closed at least partially by a closing plate 11.

The first and second grinders 12, 20 are mutually facing along an axial direction X-X and define a grinding chamber 28 for beans, for example coffee.

The grinding chamber typically has a cylindrical shape, symmetrical with respect to said axial direction X-X. The grinders 12, 20 are mechanically fixed each to the respective grinder holder 16, 24. The grinders 12,20 are provided with teeth 32 which cooperate with each other for crushing or grinding the beans. The granulometry obtainable by the grinders 12,20 is given by the relative axial distance between the teeth 32 of the respective first and second grinders 12,20.

Usually at least one of said grinders 12, 20 is a driven grinder, i.e. it is mechanically connected to an electric motor 36 for the rotation thereof, so as to initiate the grinding. The other grinder is usually fixed in rotation. For example, the first grinder 12 is fixed in rotation and the second grinder 20 rotates due to the action of the electric motor 36 to which it is operatively connected. The electric motor 36 comprises, for example, a driving shaft 38 connected directly or indirectly to the second grinder 20 through the relative second grinder holder 24.

Moreover, preferably, said grinders are coaxial with each other with respect to a rotation axis R-R of at least one grinder, which is parallel to said axial direction X-X.

Advantageously, the grinder-doser 4 comprises a device 40 for adjusting the relative axial distance 44 between said first and second grinders 12, 20 provided with a screw or ring nut 48 comprising a first threaded portion 52 and a second threaded portion 56.

The first threaded portion 52 has a first pitch 60 and is engaged with a first nut 64.

The second threaded portion 56 has a second pitch 68 and is engaged with a second nut 72.

The first nut 64 is associated with the axially fixed body 8 of the grinder-doser 4 and the second nut 72 is operatively associated with one of said grinders 12, 20, movable along the axial direction X-X with respect to the other grinder 20, 12, so as to be able to vary the relative axial distance 44 between said first and second grinders 12, 20.

According to an embodiment, the first pitch 60 is different from the second pitch 68. It is also possible to use equal pitches 60, 68 in absolute value, provided they are not opposite to each other in terms of propeller angle.

The use of pitches having the same inclination of the propeller means that for the same rotation of the screw or ring nut 48, the relative translation between the two grinders 12, 20 is equal to the sum of the translations due to each threaded portion 52, 56 by virtue of their own pitch 60, 68. For example, in the case of complete rotation, or 360°, of the screw or ring nut 48, the translation between the grinders 12, 20 and therefore the variation of the relative axial distance 44 will be exactly equal to the sum of the first pitch 60 and the second pitch 68. Obviously this variation can be additive or subtractive according to the direction of rotation of the screw or ring nut 48.

It is clear that in the case of pitches 60, 64 having mutually synchronous propellers, it is possible to use pitches 60, 64 even equal to each other in absolute value.

According to a further embodiment, the first and second pitches 60, 64 have mutually opposite inclinations, i.e. they are for example a right-handed and a left-handed one.

In this case, the relative translation (approaching and moving away) obtainable between the grinders 12, 20 will be equal to the difference between the pitches 60, 68.

For example, in the case of a complete 360° rotation of the ring nut, the relative translation (in approach or away) will be exactly equal to the difference between the first pitch 60 and the second pitch 68. It is obvious therefore that, in the case of use of mutually opposite propellers in inclination, the first and second pitch 60, 68 must be different from each other.

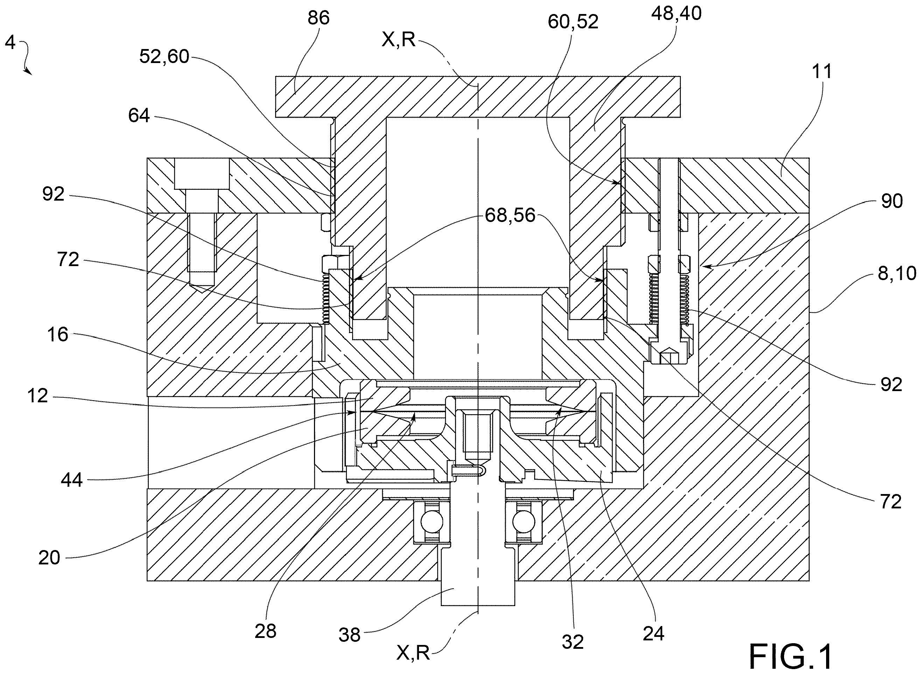

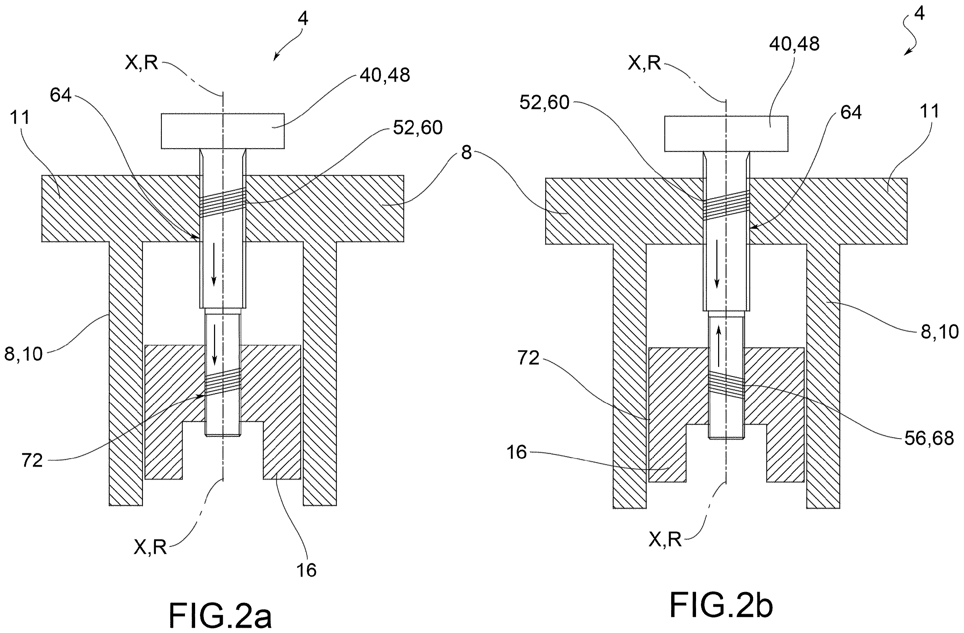

According to a possible embodiment (figures 1,2a, 2b) the screw or ring nut 48 is coaxial with the first and second grinders 12,20.

According to a further possible embodiment, the screw or ring nut 48 is offset with respect to the first and second grinders 12, 20.

For example, the second nut 72 is associated with the first grinder 12 through the first grinder holder 16; the first grinder 12 is fixed in rotation so as to be able to translate following the engagement between the first threaded portion 52 and the first nut 64. The second grinder 20 is in turn connected to motor means, such as the electric motor 36, for the rotation thereof around said axial direction X-X. In this way, the adjustment of the relative axial distance 44 between the grinders 12,20 takes place by axially moving only the first grinder 12 and the relative first grinder holder 16.

For example, in this embodiment, the first grinder 12 is an upper grinder, the second grinder 20 is a lower grinder; moreover, the adjustment device 40 of the relative axial distance 44 and the motor means 36 are axially opposite with respect to said first and second grinders 12, 20.

According to an embodiment, the screw or ring nut 48 is offset from the grinders 12, 20 and acts on a lever 76 operatively connected to the second grinder 20; in this embodiment, the first grinder 12 is axially fixed, while the second grinder 20 is axially movable with respect to the first grinder 12 by said lever 76. The lever 76 rotates around a relative fulcrum 80 and is connected at opposite ends 82, 84 with respect to the fulcrum 80, to the screw or ring nut 48 and to the second grinder 20, respectively. At said ends 82, 84 the lever system 76 may comprise joints and/or support bearings 85 to allow the rotation of the lever 76 and the rotation, in particular, of the second grinder holder 24 around its own axis of rotation R-R.

The first nut 64 is integral with the body 8 and the second nut 72 is integral with said lever 76. In this way, the rotation of the screw or ring nut 48 involves the rotation of the lever around the fulcrum 80 and therefore the approaching or moving away of the second grinder 20 with respect to the first grinder 12.

In all the described embodiments, the screw or ring nut 48 may be provided with a knob 86 for its manual rotation by a user.

In all embodiments, it is also possible to provide that the screw or ring nut 48 is operatively connected to motor means for automatic adjustment of the distance D between the grinders 12,20. It should be noted that automatic adjustment is not necessarily an alternative to manual adjustment through the knob 86; in other words, the knob 86 and the automatic adjustment by motor can coexist in the same embodiment.

According to a possible embodiment, the adjustment device 40 of the relative axial distance 44 between said first and second grinders 12, 20 is provided with a clearance recovery system 90.

For example, said clearance recovery system 90 comprises at least one spring 92; preferably, said clearance recovery system 90 comprises three springs 92 that are angularly spaced apart at 120°.

Said at least one spring 92 exerts an axial pushing action between the grinder holder 16, 24 of the axially movable grinder 12, 20 and a portion of the grinder-doser 4 integral with the fixed body 8. In this way the spring 92 manages to cancel the clearances present in the coupling kinematic mechanisms and in the screw/nut screw gears present in the adjustment device 40.

As can be appreciated from the description, the grinder-doser according to the invention allows overcoming the drawbacks of the prior art.

In particular, the present invention allows obtaining an extremely accurate adjustment of the mutual position of the grinders and therefore of the granulometry obtainable by the grinder-doser, by means of an adequate angular stroke of the adjustment device.

Furthermore, it is possible to obtain an extremely precise adjustment without having to resort to screws having a particularly reduced pitch, with the associated difficulties in terms of thread resistance and cost of manufacturing the thread itself.

In particular, it is possible to adjust the adjustment precision also by using threads with inverted pitches, for example a right-hand and a left-hand thread.

In this way it is possible to use even relatively coarse threads (but at the same time mechanically resistant and cost-effective to be made) with relatively high but slightly different pitches, so as to obtain at the same time an extremely fine adjustment and a resistant mechanism durable over time. For example, if two inverted helix threads with pitches of 1.2 mm and 1.0 mm are used, it is possible to obtain an adjustment equivalent to a single thread of 0.2mm pitch, therefore extremely fine, while using much larger, more resistant and more cost-effective pitches.

The use of a coaxial or offset adjustment device is also linked to the size and construction type of the grinder-doser. In general, the lever effect will further amplify the regulation obtainable through the adjustment device.

## Claims

1. A grinder-doser (4) for beans, for example coffee beans, comprising a body (8) which encloses:
- a first grinder (12) supported by a relative first grinder-holder (16), and a second grinder (20) supported by a relative second grinder-holder (24),
wherein the first and second grinders (12, 20) are facing along an axial direction (X-X) and define a grinding chamber (28) for coffee beans,
- an adjustment device (40) of the relative axial distance (44) between said first and second grinders (12,20) provided with a screw or ring-nut (48) comprising a first threaded portion (52), having a first pitch (60) being engaged with a first nut (64) and a second threaded portion (56), having a second pitch (68) and being engaged with a second nut (72),
- wherein the first nut (64) is associated with the axially fixed body (8) of the grinder-doser (4) and the second nut (72) is operatively associated with one of said grinders (12,20), movable along the axial direction (X-X) with respect to the other grinder (20,12), so as to be able to vary the relative axial distance (44) between said first and second grinders (12,20), the first pitch being different from the second pitch.

2. The grinder-doser (4) for beans according to claim 1, wherein the first and second pitches (60,68) have opposite inclinations to each other.

3. The grinder-doser (4) for beans according to any one of the claims from 1 to 2, wherein the screw or ring nut (48) is coaxial with the first and second grinders (12,20) .

4. The grinder-doser (4) for beans according to any one of the claims from 1 to 2, wherein the screw or ring nut (48) is offset from the first and second grinders (12,20) .

5. The grinder-doser (4) for beans according to any one of the claims from 1 to 4, wherein the second nut (72) is associated with the first grinder (12) by means of the first grinder-holder (16), said first grinder (12) being fixed in rotation, said second grinder (20) being connected to drive means (36) for its rotation around said axial direction (X-X).

6. The grinder-doser (4) for beans according to claim 5, wherein the first grinder (12) is an upper grinder, the second grinder (20) is a lower grinder, wherein the adjustment device (40) of the relative axial distance (44) and the motor means (36) are axially opposite with respect to said first and second grinders (12,20).

7. The grinder-doser (4) for beans according to claim 1 or 2, wherein the screw or ring nut (48) is offset from the grinders (12, 20) and acts on a lever (76) operatively connected to the second grinder (20), the first grinder (12) being axially fixed, the second grinder (20) being axially movable with respect to the first grinder (12) by said lever (76).

8. The grinder-doser (4) for beans according to claim 7, wherein the first nut (64) is integral with the body (8) and the second nut (72) is integral with said lever (76).

9. The grinder-doser (4) for beans according to any of the preceding claims, wherein the screw or ring nut (48) is provided with a knob (86) for its manual rotation by a user.

10. The grinder-doser (4) for beans according to any of the preceding claims, wherein the screw or ring nut (48) is operatively connected to motor means for automatic adjustment of the distance (D) between the grinders (12,20) .

11. The grinder-doser (4) for beans according to any of the preceding claims, wherein the adjustment device (40) of the relative axial distance (44) between said first and second grinders (12,20) is provided with a clearance recovery system (90).

12. The grinder-doser (4) for beans according to claim 11, wherein said clearance recovery system (90) comprises at least one spring (92).

13. The grinder-doser (4) for beans according to any of the claims from 11 to 12, wherein said clearance recovery system (90) comprises three springs (92) equally angularly spaced from each other at 120°.

14. The grinder-doser (4) for beans according to any of the claims from 12 to 13, wherein said at least one spring (92) exerts an axial pushing action between the grinder holder (16,24) of the axially movable grinder (12,20) and a portion of the grinder-doser(4) integral with the fixed body (8).

## Patentansprüche

1. Mühlendosiervorrichtung (4) für Bohnen, beispielsweise Kaffeebohnen, umfassend einen Körper (8), aufweisend:
- ein erstes Mahlwerk (12), das von einem entsprechenden ersten Mahlwerkhalter (16) getragen wird, und ein zweites Mahlwerk (20), das von einem entsprechenden zweiten Mahlwerkhalter (24) getragen wird,
wobei das erste und das zweite Mahlwerk (12, 20) entlang einer axialen Richtung (X-X) gegenüberliegen und eine Mahlkammer (28) für Kaffeebohnen definieren,
- eine Einstellvorrichtung (40) des relativen axialen Abstands (44) zwischen dem ersten und dem zweiten Mahlwerk (12, 20), die mit einer Schraube oder Ringmutter (48) versehen ist, umfassend einen ersten Gewindeabschnitt (52) mit einer ersten Steigung (60), der mit einer ersten Mutter (64) in Wirkverbindung steht, und einen zweiten Gewindeabschnitt (56) mit einer zweiten Steigung (68), der mit einer zweiten Mutter (72) in Wirkverbindung steht,
- wobei die erste Mutter (64) dem axial fixierten Körper (8) der Mühlendosiervorrichtung (4) zugeordnet ist und die zweite Mutter (72) funktionell einem der Mahlwerke (12, 20) zugeordnet ist, das entlang der axialen Richtung (X-X) in Bezug auf das andere Mahlwerk (20, 12) bewegbar ist, um den relativen axialen Abstand (44) zwischen dem ersten und dem zweiten Mahlwerk (12, 20) variieren zu können, wobei sich die erste Steigung von der zweiten Steigung unterscheidet.

2. Mühlendosiervorrichtung (4) für Bohnen nach Anspruch 1, wobei die erste und die zweite Steigung (60, 68) entgegengesetzte Neigungen zueinander aufweisen.

3. Mühlendosiervorrichtung (4) für Bohnen nach einem der Ansprüche 1 bis 2, wobei die Schraube oder Ringmutter (48) koaxial mit dem ersten und zweiten Mahlwerk (12, 20) ist.

4. Mühlendosiervorrichtung (4) für Bohnen nach einem der Ansprüche 1 bis 2, wobei die Schraube oder Ringmutter (48) gegenüber dem ersten und zweiten Mahlwerk (12, 20) versetzt ist.

5. Mühlendosiervorrichtung (4) für Bohnen nach einem der Ansprüche 1 bis 4, wobei die zweite Mutter (72) dem ersten Mahlwerk (12) mittels des ersten Mahlwerkhalters (16) zugeordnet ist, wobei das erste Mahlwerk (12) drehfest ist und das zweite Mahlwerk (20) mit Antriebsmitteln (36) für ihre Drehung um die axiale Richtung (X-X) verbunden ist.

6. Mühlendosiervorrichtung (4) für Bohnen nach Anspruch 5, wobei das erste Mahlwerk (12) ein oberes Mahlwerk und das zweite Mahlwerk (20) ein unteres Mahlwerk ist, wobei die Einstellvorrichtung (40) des relativen Achsabstandes (44) und das Motormittel (36) in Bezug auf das erste und zweite Mahlwerk (12, 20) axial gegenüberliegen.

7. Mühlendosiervorrichtung (4) für Bohnen nach Anspruch 1 oder 2, wobei die Schraube oder Ringmutter (48) gegenüber den Mahlwerken (12, 20) versetzt ist und auf einen Hebel (76) wirkt, der mit dem zweiten Mahlwerk (20) in funktionell verbunden ist, wobei das erste Mahlwerk (12) axial fixiert ist und das zweite Mahlwerk (20) durch den Hebel (76) in Bezug auf das erste Mahlwerk (12) axial bewegbar ist.

8. Mühlendosiervorrichtung (4) für Bohnen nach Anspruch 7, wobei die erste Mutter (64) mit dem Körper (8) und die zweite Mutter (72) mit dem Hebel (76) verbunden ist.

9. Mühlendosiervorrichtung (4) für Bohnen nach einem der vorhergehenden Ansprüche, wobei die Schraube oder Ringmutter (48) mit einem Knopf (86) für ihre manuelle Drehung durch einen Benutzer versehen ist.

10. Mühlendosiervorrichtung (4) für Bohnen nach einem der vorhergehenden Ansprüche, wobei die Schraube oder Ringmutter (48) mit einem Motormittel zur automatischen Einstellung des Abstands (D) zwischen den Mahlwerken (12, 20) funktionell verbunden ist.

11. Mühlendosiervorrichtung (4) für Bohnen nach einem der vorhergehenden Ansprüche, wobei die Einstellvorrichtung (40) des relativen axialen Abstands (44) zwischen dem ersten und dem zweiten Mahlwerk (12, 20) mit einem Abstandsregelsystem (90) versehen ist.

12. Mühlendosiervorrichtung (4) für Bohnen nach Anspruch 11, wobei das Abstandsregelsystem (90) zumindest eine Feder (92) aufweist.

13. Mühlendosiervorrichtung (4) für Bohnen nach einem der Ansprüche 11 bis 12, wobei das Abstandsregelsystem (90) drei Federn (92) aufweist, die in einem Winkel von 120° gleichmäßig voneinander winkelmäßig beabstandet sind.

14. Mühlendosiervorrichtung (4) für Bohnen nach einem der Ansprüche 12 bis 13, wobei die zumindest eine Feder (92) eine axiale Druckwirkung zwischen dem Mahlwerkhalter (16, 24) des axial bewegbaren Mahlwerks (12, 20) und einem Abschnitt der Mühlendosiervorrichtung (4) ausübt, der mit dem festen Körper (8) verbunden ist.

## Revendications

1. Moulin doseur (4) à graines, par exemple des graines de café, comprenant un corps (8) qui renferme :
- un premier broyeur (12) supporté par un premier porte-broyeur relatif (16), et un deuxième broyeur (20) supporté par un deuxième porte-broyeur relatif (24),
dans lequel les premier et deuxième broyeurs (12, 20) se font face le long d'une direction axiale (X-X) et définissent une chambre de broyage (28) pour des graines de café,
- un dispositif de réglage (40) de la distance axiale relative (44) entre lesdits premier et deuxième broyeurs (12, 20) muni d'une vis ou d'un écrou à oeil (48) comprenant une première partie filetée (52), ayant un premier pas (60) qui est en prise avec un premier écrou (64) et une deuxième partie filetée (56), ayant un deuxième pas (68) et qui est en prise avec un deuxième écrou (72),
- dans lequel le premier écrou (64) est associé au corps (8) axialement fixe du moulin doseur (4) et le deuxième écrou (72) est fonctionnellement associé à l'un desdits broyeurs (12, 20), mobile le long de la direction axiale (X-X) par rapport à l'autre broyeur (20, 12), de manière à pouvoir faire varier la distance axiale relative (44) entre lesdits premier et deuxième broyeurs (12, 20), le premier pas étant différent du deuxième pas.

2. Moulin doseur (4) à graines selon la revendication 1, dans lequel les premier et deuxième pas (60, 68) ont des inclinaisons opposées l'un par rapport à l'autre.

3. Moulin doseur (4) à graines selon l'une quelconque des revendications 1 à 2, dans lequel la vis ou l'écrou à oeil (48) est coaxial avec les premier et deuxième broyeurs (12, 20).

4. Moulin doseur (4) à graines selon l'une quelconque des revendications 1 à 2, dans lequel la vis ou l'écrou à oeil (48) est décalé par rapport aux premier et deuxième broyeurs (12, 20).

5. Moulin doseur (4) à graines selon l'une quelconque des revendications 1 à 4, dans lequel le deuxième écrou (72) est associé au premier broyeur (12) par l'intermédiaire du premier porte-broyeur (16), ledit premier broyeur (12) étant fixe en rotation, ledit deuxième broyeur (20) étant relié à des moyens d'entraînement (36) pour sa rotation autour de ladite direction axiale (X-X).

6. Moulin doseur (4) à graines selon la revendication 5, dans lequel le premier broyeur (12) est un broyeur supérieur, le deuxième broyeur (20) est un broyeur inférieur, dans lequel le dispositif de réglage (40) de la distance axiale relative (44) et les moyens moteurs (36) sont axialement opposés par rapport auxdits premier et deuxième broyeurs (12, 20).

7. Moulin doseur (4) à graines selon la revendication 1 ou 2, dans lequel la vis ou l'écrou à oeil (48) est décalé par rapport aux broyeurs (12, 20) et agit sur un levier (76) relié de manière fonctionnelle au deuxième broyeur (20), le premier broyeur (12) étant fixe axialement, le deuxième broyeur (20) étant mobile axialement par rapport au premier broyeur (12) par ledit levier (76).

8. Moulin doseur (4) à graines selon la revendication 7, dans lequel le premier écrou (64) est d'un seul tenant avec le corps (8) et le deuxième écrou (72) est d'un seul tenant avec ledit levier (76).

9. Moulin doseur (4) à graines selon l'une quelconque des revendications précédentes, dans lequel la vis ou l'écrou à oeil (48) est muni d'un bouton (86) pour sa rotation manuelle par un utilisateur.

10. Moulin doseur (4) à graines selon l'une quelconque des revendications précédentes, dans lequel la vis ou l'écrou à oeil (48) est relié de manière fonctionnelle à des moyens moteurs pour un réglage automatique de la distance (D) entre les broyeurs (12, 20).

11. Moulin doseur (4) à graines selon l'une quelconque des revendications précédentes, dans lequel le dispositif de réglage (40) de la distance axiale relative (44) entre lesdits premier et deuxième broyeurs (12, 20) est doté d'un système de restauration d'écartement (90).

12. Moulin doseur (4) à graines selon la revendication 11, dans lequel ledit système de restauration d'écartement (90) comprend au moins un ressort (92).

13. Moulin doseur (4) à graines selon l'une quelconque des revendications 11 à 12, dans lequel ledit système de restauration d'écartement (90) comprend trois ressorts (92) espacés angulairement de manière égale les uns des autres à 120°.

14. Moulin doseur (4) à graines selon l'une quelconque des revendications 12 à 13, dans lequel ledit au moins un ressort (92) exerce une action de poussée axiale entre le porte-broyeur (16, 24) du broyeur mobile axialement (12, 20) et une partie du moulin doseur (4) d'un seul tenant avec le corps fixe (8).
